(19) **Europäisches Patentamt / European Patent Office / Office européen des brevets**

(11) **EP 3 683 863 B1**

(12) **EUROPEAN PATENT SPECIFICATION**

(45) Date of publication and mention
of the grant of the patent:
**20.03.2024 Bulletin 2024/12**

(21) Application number: **18872971.9**

(22) Date of filing: **05.10.2018**

(51) International Patent Classification (IPC):
**H01M 10/06** (2006.01)     **H01M 50/466** (2021.01)
**H01M 50/463** (2021.01)

(52) Cooperative Patent Classification (CPC):
**H01M 50/466; H01M 10/06; H01M 50/463;**
Y02E 60/10; Y02P 70/50

(86) International application number:
**PCT/JP2018/037304**

(87) International publication number:
**WO 2019/087685 (09.05.2019 Gazette 2019/19)**

(54) **METHOD FOR MANUFACTURING LEAD STORAGE CELL**

VERFAHREN ZUR HERSTELLUNG EINER BLEIAKKUMULATORZELLE

PROCÉDÉ PERMETTANT DE FABRIQUER UNE PILE RECHARGEABLE AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2017   JP 2017211363**

(43) Date of publication of application:
**22.07.2020   Bulletin 2020/30**

(73) Proprietor: **GS Yuasa International Ltd.
Kyoto-shi, Kyoto 601-8520 (JP)**

(72) Inventors:
• **INAGAKI, Satoshi
Kyoto-shi
Kyoto 601-8520 (JP)**

• **KYO, Masaaki
Kyoto-shi
Kyoto 601-8520 (JP)**
• **WADA, Hidetoshi
Kyoto-shi
Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
JP-A- H1 031 992      JP-A- H04 167 356
JP-A- 2000 173 575    JP-A- 2001 210 302
JP-A- 2004 259 522    JP-A- 2006 244 914
JP-U- H0 543 462      JP-U- H01 100 367

**Description**

TECHNICAL FIELD

The present invention relates to a method for manufacturing a lead-acid battery.

BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution. Generally, a sulfuric acid aqueous solution is used as the electrolyte solution.

JP-A-2015-22796 discloses an example in which a negative electrode plate is stored in a bag-shaped polyethylene separator, and the bag-shaped separator has a rib on the negative electrode plate side. In this example, the ribs are formed inside the bag-shaped separator.

Moreover, CD-ROM of the specification and drawings annexed to the request of Japanese Utility Model Application No. 109387/1991 (Laid-open No. 43462/1993; THE FURUKAWA BATTERY CO, LTD.; 11 June 1993) discloses a pocket type separator for an electrode of storage battery, such separator having a bottom, closed left and right side edges and an open top side. The inner surfaces of front and rear sides of the pocket facing each other include a plurality of parallel, vertical, widthwise spaced ribs in middle regions constituting most of the facing surface and a plurality of intersectant vertically spaced ribs on the Widthwise left and right side end portions of the facing surfaces and intersecting front and rear corner edge portion of opposite side edges of an electrode plate contained in the packet type separator.

When the separator is formed in a bag shape, the separator is generally folded into a U-shape, and both side edges are joined. Examples of a method for joining both side edges include a method using gear sealing, heat sealing, and ultrasonic sealing, and a method using an adhesive or an adhesive tape (e.g., see JP-A-2009-245901).

SUMMARY OF THE INVENTION

PROBLEMS TO BE SOLVED BY THE INVENTION

In the manufacturing of the bag-shaped separator with the ribs formed inside as exemplified in JP-A-2015-22796, in the case of joining both side edges of the separator, it is possible to use a separator having ribs formed on the joint surface.

However, when the separator having the ribs formed on the joint surface is superimposed and both side edges are joined, sufficient joining strength may not be obtained depending on the arrangement of the ribs.

MEANS FOR SOLVING THE PROBLEMS

One aspect of the present invention is a method for manufacturing a lead-acid battery having an electrode group in which a plurality of positive electrode plates and a plurality of negative electrode plates are stacked via a separator, the method including processing the separator into a bag shape having a first region and a second region facing each other. The step of processing the separator into a bag shape includes forming a joint part that includes at least a part of the first region and at least a part of the second region. A plurality of first ribs are provided in the first region. A plurality of second ribs are provided in the second region. The step of forming a joint part includes making the first region and the second region face each other so that at least one of the first ribs and at least one of the second ribs intersect at the joint part.

ADVANTAGES OF THE INVENTION

According to the present disclosure, it is possible to enhance the strength of the joint part of the bag-shaped separator used for a lead-acid battery.

BRIEF DESCRIPTION OF THE DRAWINGS

Fig. 1 is a front view schematically showing the appearance of a separator for a lead-acid battery used in a method for manufacturing a lead-acid battery according to one aspect of the present invention.

Fig. 2 is a schematic view showing a separator sheet before a separator for a lead-acid battery is processed into a bag shape.

Figs. 3(a) and 3(b) are schematic diagrams each showing a state of inner ribs when the separator sheet is superimposed.

Fig. 4 is a schematic view showing another embodiment of Fig. 2, showing a separator sheet before a separator for a lead-acid battery is processed into a bag shape.

Fig. 5 is a schematic view showing another embodiment of Fig. 2, showing a separator sheet before a separator for a lead-acid battery is processed into a bag shape.

Fig. 6 is a schematic view showing another embodiment of Fig. 2, showing a separator sheet before a separator for a lead-acid battery is processed into a bag shape.

Fig. 7 is a perspective view in which a part of the lead-acid battery using the bag-shaped separator is cut away.

MODES FOR CARRYING OUT THE INVENTION

A method for manufacturing a lead-acid battery according to one aspect of the present invention is a method for manufacturing a lead-acid battery that has an electrode group in which a plurality of positive electrode plates and a plurality of negative electrode plates are each stacked via a separator, and the method includes processing the separator into a bag shape having a first region and a second region facing each other. The step of processing the separator into a bag shape includes forming a joint part that includes at least a part of the first region and at least a part of the second region. A plurality of first ribs are provided in the first region, and a plurality of second ribs are provided in the second region. The step of forming the joint part includes making the first region and the second region face each other so that at least one of the first ribs and at least one of the second ribs intersect at the joint part.

According to the above aspect of the present invention, in a predetermined region provided in the first region and the second region (preferably, an inner peripheral edge), a joint part for binding the first region and the second region into a bag shape is formed.

Specifically, the joint part can be formed by, for example, one separator sheet having the first region and the second region on the same main surface is folded in two to make the first region and the second region face each other. In this case, by superimposing the one separator sheet in a U-shape, it is possible to manufacture a bag-shaped separator in which the folded portion is taken as the lower end, joint parts are provided on the left end side and the right end side, and an opening is provided at the upper end. However, the bag-shaped separator may be manufactured by taking the right end (or left end) of the separator sheet as the folded portion and forming the joint parts on the left end side (or right end side) and the lower end side. Alternatively, the bag-shaped separator may be manufactured by laminating a first half sheet having the first region on the main surface and a second half sheet having the second region on the main surface to make the first region and the second region face each other. In this case, two half sheets are superimposed, and the joint part is formed on each of the left end side, the right end side, and the lower end side, so that a bag-shaped separator can be manufactured. The bag-shaped separator is used to store the positive electrode plate or the negative electrode plate of the lead-acid battery.

Here, in the bag-shaped separator, a direction in which the opening for insertion of the positive electrode plate or the negative electrode plate is defined as the upper side (vertical direction) of the separator, and the opposite side thereto is defined as the lower side. When the upper and lower sides of the separator are defined in this way, a direction located on the left side is defined as the left side of the separator, and a direction located on the right side is defined as the right side of the separator.

The rib refers to a protruding portion protruding from one surface of the separator, and is provided to prevent close contact between the separator and the plate and to prevent breakage due to oxidation degradation of the separator and/or permeation short circuit. The ribs are provided on the surface of the separator in a predetermined pattern.

The outer shape of the bag-shaped separator can be formed in a shape similar to the outer shape of the first region. The outer shape of the first region is preferably a quadrangular shape. In this case, the bag-shaped separator has a substantially quadrangular outer shape. By providing the joint part in a region near at least two sides constituting the quadrangle, the separator sheet (or two half sheets) can be processed into a bag shape. The outer shape of the bag-shaped separator is not limited to a quadrangle, but may be any shape (e.g., polygon or arc). The sides forming the polygon need not be strictly straight lines, but may have curved portions or bent portions. For example, in a case where a bag-shaped separator having an approximately triangular outer shape is produced by folding, the joint region only needs to be provided on one end side corresponding to one side of the triangle.

The first region and the second region constitute inner surfaces of the bag-shaped separator facing each other. The separator sheet or the half sheet preferably has a joint region and a plate region in the first region and the second region. The joint region is a region including a joint part that binds the first region and the second region in a bag shape, and is set to be a region wider than the joint part in consideration of a positioning margin related to the joining. Preferably, the joint region is provided on the end side of the separator sheet or the half sheet, and a peripheral region at a distance to the end within a predetermined distance can be set as the joint region. In contrast, the plate region is a region separated from the joint region, and is a region facing the positive electrode plate or the negative electrode plate when the positive electrode plate or the negative electrode plate is stored into the bag-shaped separator.

When the joint region is provided on the end side of the separator sheet or the half sheet, the joint part may be provided so as to include the end. Alternatively, in the joint region, the joint part may be formed by extending in parallel with the contour of the end of the bag-shaped separator (i.e., the contour of the end of the separator sheet or the half sheet), or may be formed by extending in an arbitrary contour shape different from the contour of the end of the bag-shaped separator.

A plurality of first ribs are provided in the first region, and a plurality of second ribs are provided in the second region. The inner surfaces of the joined bag-shaped separator are defined as a first surface and a second surface. In the joined bag-shaped separator, the first region is on the first surface, and the second region is on the second surface. Since the first rib is formed in the plate region in the first region on the first surface, it is possible to prevent one of the positive electrode plate and the negative electrode plate from coming into close contact with the first surface. Similarly, since the second rib is formed in the plate region in the second region on the second surface, it is possible to prevent one of the electrode plates from coming into close contact with the second surface. The first rib and the second rib provided in the plate region prevent breakage and/or a permeation short circuit due to the oxidation degradation of the separator when the positive electrode plate or the negative electrode plate is stored. Hereinafter, the first rib and the second rib are collectively referred to as "inner ribs".

Generally, the first ribs and the second ribs are arranged in a linear pattern such that the plurality of ribs have a regular interval in a predetermined region in parallel with adjacent ribs.

The first rib and the second rib (inner rib) are also formed in the joint regions in the first region and the second region. When the inner rib is formed in the joint region, the first rib and the second rib can be superimposed when the first region and the second region are made to face each other to form the joint part. However, depending on the method of the superimposition, sufficient joining strength may not be obtained.

For example, at the time of joint formation, the first region and the second region can be superimposed such that the second rib in the joint region of the second region is stuck into a valley between the adjacent first ribs in the joint region of the first region (or the first rib in the joint region of the first region is stuck into a valley between the adjacent second ribs in the joint region of the second region). In this case, the joining strength is lower than when the first rib and the second rib superimpose. In particular, when the joining method is a crimping method such as gear sealing, a decreasing tendency of the joining strength increases. However, in consideration of the accuracy in the positioning of the joint part by a joining device, it is difficult to completely prevent a situation where the second rib is stuck into the valley between the first ribs (or the first rib is stuck into the valley between the second ribs), which contributes to variation in joining strength. As a result, the performance as a lead-acid battery also varies.

This is a common problem in the case of manufacturing the bag-shaped separator provided with the inner ribs irrespective of welding or adhesion. However, the problem is remarkable in the method of performing the joining by compressing the joint part to a predetermined thickness, such as a joining method based on crimping like a gear sealing method, or a heat welding method. Of the first rib and the second rib, one rib is stuck into a valley between the other ribs, whereby the thickness of the joint part before crimping becomes smaller than expected. As a result, a compression ratio at the time of compression to a predetermined thickness decreases, easily causing a decrease in joining strength.

Therefore, one aspect of the present invention includes, at the time of forming a joint part, making the first region and the second region face each other so that at least one of the first ribs and at least one of the second ribs intersect at the joint part. By making the first region and the second region face each other in accordance with the arrangement of the inner ribs so that the first rib and the second rib intersect, it is possible to prevent another rib from being stuck into a valley between adjacent ribs. By forming the joint part in a state where the ribs are prevented from being stuck, it is possible to decrease variation in the strength of the joint part of the bag-shaped separator, and maintain the joining strength.

Here, that the first rib and the second rib "intersect" refers to a state where the first region and the second region face each other and the first rib and the second rib are in contact at least at a point. The first rib and the second rib may be in line or surface contact. Note that the number of locations where the ribs are in contact at least at a point is not limited to one. The linear pattern of the ribs may be straight line or curved line. A dotted line in which a part of a straight line or a curve line is missing may be used. As the pattern of the ribs, a striped pattern made up of a plurality of ribs formed in a parallel straight line is preferred because the ribs can be manufactured easily. Regarding an angle at which the first rib and the second rib are intersected, the pattern of the first ribs and the pattern of the second ribs may intersect at an angle of preferably 0.2° or more, and more preferably 0.3° or more. When the intersection angle is 0.2° or more, sufficient joining strength can be obtained.

A case is conceivable where, depending on the method of forming the joint part, it is difficult to determine whether or not the first rib and the second rib have been intersected at the joint part of the manufactured bag-shaped separator based on the state of the joint part. Also, in this case, it is possible to estimate whether or not the first rib and the second rib have been intersected at the joint part from the arrangement of the first rib and the second rib in the region around the joint part. For example, when the plurality of first ribs and the plurality of second ribs are each formed in a linear shape extending in a certain direction at a regular interval in the joint region, it can be estimated that the first ribs and the second rib are similarly formed in the joint part in a linear shape extending in the same direction as the rib extending direction in the joint region at the same rib interval as the rib interval in the joint region. That is, it is possible to interpolate or extrapolate the rib pattern at the joint part from the rib pattern in the peripheral region of the joint part to estimate the intersection of the first rib and the second rib.

As the arrangement pattern of the first rib and the second rib, for example, when a quadrangular (rectangular, trapezoidal, or parallelogram) separator sheet having substantially parallel opposite sides is considered as an arrangement pattern of the first rib and the second rib, it is possible to employ a configuration where both the first rib and the second rib linearly extend on the main surface of the separator sheet in the same direction in a region (joint region) in the first region of the separator sheet where at least the joint part is provided and in a region (joint region) in the second region of the separator sheet where at least the joint part is provided. That the first rib and the second rib extend in the same direction on the main surface means that both the first rib and the second rib extend in the same direction in a state where the first region and the second region are flush with each other before the separator sheet is folded in two. Both the first rib and the second rib may be linearly extended on the main surface of the separator sheet in a direction substantially parallel to the opposite side of the separator sheet. Alternatively, both the first rib and the second rib may be linearly extended on the main surface of the separator sheet in a direction substantially perpendicular to the opposite side of the separator sheet. Note that "parallel" or "perpendicular" to the opposite side does not mean that the extending direction of the rib is strictly parallel or perpendicular in the mathematical sense. In these cases, when the separator sheet is folded in two to make the first region and the second region face each other, the separator sheet is folded in two along a direction inclined from a direction perpendicular to the opposite side as a folding axis. For example, when the separator sheet is a rectangle having the opposite side as the longer side, the separator sheet is folded in two along a direction inclined from the shorter side of the separator sheet as an axis. By shifting the axis for folding the separator sheet from the axis of symmetry, when the first region and the second region are made to face each other, the second rib can be linearly extended in an oblique direction different from the extension direction of the first rib.

Further, as the arrangement pattern of the first rib and the second rib, for example, it is possible to employ a configuration where both the first rib and the second rib linearly extend on the main surface of the separator sheet in the same direction but in directions inclined from a direction parallel to the opposite side of the separator sheet in the region (joint region) in the first region of the separator sheet where at least the joint part is provided and in the region (joint region) in the second region of the separator sheet where at least the joint part is provided. In this case, when the separator sheet is folded in two and the first region and the second region are made to face each other, the separator sheet may be folded in two along a direction perpendicular to the opposite side as an axis. For example, when the separator sheet is a rectangle having the longer side as the opposite side, the separator sheet may be folded in two along the shorter side direction of the separator sheet as the axis. Since the first rib and the second rib extend while being inclined from a direction parallel to the opposite side, when the first region and the second region are made to face each other, the second rib can be linearly extended in an oblique direction with respect to the extension direction of the first rib.

By making the first region and the second region face each other in a state where the second rib extends in a direction inclined with respect to the first rib, the first rib and the second rib easily intersect at the joint part. Thereby, the variation in joining strength is decreased, and the joining strength can be maintained.

Further, both the first rib and the second rib may be extended in a direction inclined from a direction parallel to the opposite side of the separator sheet, and the separator sheet may be folded in two along a direction inclined from a direction perpendicular to the opposite side of the separator sheet as an axis. The angle at which the first rib intersects with the second rib can be further increased. This further facilitates intersecting the first rib and the second rib at the joint part, and facilitates intersecting the first ribs and the second ribs at a plurality of locations. As a result, the variation in joining strength can be further decreased, and the joining strength can be further enhanced.

At this time, also in the plate region, the first rib preferably extends in the same direction as the first rib in the joint region, from the viewpoint of the easiness of the rib processing. Similarly, in the plate region, the second ribs preferably extend in the identical direction to the second ribs in the joint region, from the viewpoint of easy rib processing.

The first ribs preferably include a plurality of first joint ribs provided at a regular interval in the joint region in the first region, and a plurality of first plate ribs are provided at a regular interval in the plate region in the first region. At this time, the interval at which the first joint ribs are provided may be made smaller than the interval at which the first plate ribs are provided. Thereby, more first ribs can be intersected with the second ribs in the joint region.

Similarly, the second ribs preferably include a plurality of second joint ribs provided at a regular interval in the joint region in the second region, and a plurality of second plate ribs are provided at a regular interval in the plate region in the second region. At this time, the interval at which the second joint ribs are provided may be made smaller than the interval at which the second plate ribs are provided. Thereby, the first ribs can be intersected with more second ribs in the joint region.

By increasing the number of intersections between the first rib and the second rib at the joint part, the joining strength can be maintained high.

It is preferable that the separator have a third region on the back surface of the first region and a fourth region on the back surface of the second region, a plurality of third ribs be provided in the third region, and a plurality of fourth ribs be provided in the fourth region. The outer surfaces of the joined bag-shaped separator are defined as a third surface and a fourth surface. In the joined bag-shaped separator, the third region is on the third surface, and the fourth region is on the fourth surface. The third rib and the fourth rib prevent the other of the positive electrode plate and the negative electrode plate, which is not stored into the separator bag, from adhering to the separator. The third rib and the fourth rib provided in the plate region prevent breakage and/or a permeation short circuit due to the oxidation degradation of the separator caused by contact with the other electrode plate. Hereinafter, the third rib and the fourth rib will be collectively referred to as "outer ribs".

The performance of the battery can be enhanced by the bag-shaped separator provided with the inner ribs and the outer ribs. However, in this case, it is necessary to hold the total thickness of the separator small in order to maintain the charge-discharge characteristics high, thereby necessitating a decrease in the thickness of the base portion of the separator. As a result, the joining strength at the end of the separator tends to decrease, and the problem of the variation in joining strength becomes more serious.

The third rib may be provided in a region in the third region corresponding to the joint region in the first region (i.e., a region of the joint region on the back surface side in the first region). The fourth rib may be provided in a region in the fourth region corresponding to the joint region in the second region (i.e., a region of the joint region on the back surface side in the second region). In this case, the third rib or the fourth rib (outer rib) is compressed together at the time of forming the joint by crimping or the like. This makes it possible to increase the compression ratio and increase the joining strength, but also makes the variation in joining strength due to variation in the positioning of the joining ends more remarkable. However, by intersecting the first rib and the second rib at the joint part, it is possible to prevent another rib from being stuck into the valley between the adjacent ribs, and to maintain the joining strength high.

As thus described, by making the first region and the second region face each other so that the first rib and the second rib intersect at the joint part and forming the joint part, it is possible to decrease variation in the joining strength of the bag-shaped separator, and maintain the joining strength. The effects described above are not limited to the crimping method using gear sealing, but the effects can be obtained also in heat welding and the like. The step of forming a joint part may include joining at least a part of the first region and at least a part of the second region by crimping or welding.

In one aspect of the present invention, the method for manufacturing a lead-acid battery can further include disposing the negative electrode plate so that the negative electrode plate is stored in the separator processed into a bag shape. As a method for storing the negative electrode plate, after the negative electrode plate is pressed against the plate region in the first region of the separator sheet or the plate region in the second region of the separator sheet, the separator is folded in two, so that the joint part can be formed in a state where the negative electrode plate is sandwiched between the first region and the second region. In this case, the formation of the joint part and the storage of the negative electrode plate into the bag-shaped separator are performed in parallel. However, the negative electrode plate may be stored into the bag-shaped separator after the joint is formed and the separator is processed into a bag shape.

The bag-shaped separator is effective as a separator used in a lead-acid battery in the case of storing the negative electrode plate, and can enhance resistance to permeation short circuit.

Hereinafter, the method for manufacturing a lead-acid battery according to the embodiment of the present invention, particularly the aspect of the separator, will be described in detail with reference to the drawings. However, the present invention is not limited to the following embodiment. Further, in the following drawings, a state of inner ribs in a joint region of the separator will be emphasized and described, and the actual composition ratio of each part of the separator may not match the corresponding composition ratio of each part in the drawing.

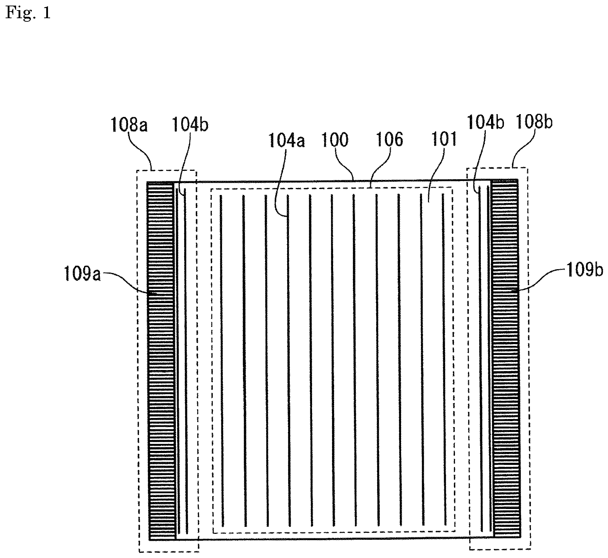

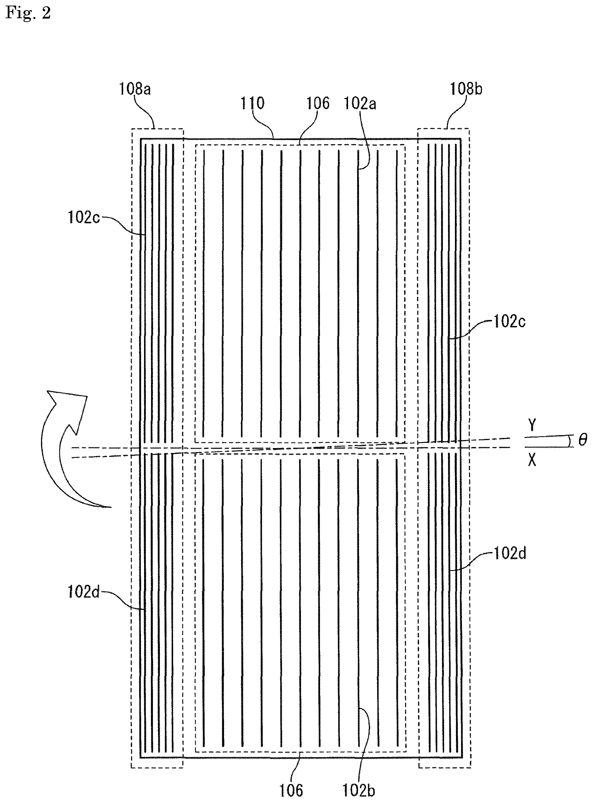

Fig. 1 shows a schematic diagram of the separator for a lead-acid battery separator used in the method according to the embodiment of the present invention, as viewed from the outside of the bag. Fig. 2 schematically shows a separator sheet before the separator of Fig. 1 is processed into a bag shape. A separator 100 includes a bag-shaped base 101 made of a microporous film, inner ribs 102a to 102d protruding from the inner surface (first surface or second surface) of the base 101, and outer ribs 104a, 104b protruding from the outer surface (third surface) of the base 101. However, the inner ribs 102a to 102d are inside the bag-shaped separator, and are thus not shown in Fig. 1. When the negative electrode plate is stored in separator 100, the inner ribs 102a to 102d are located on the negative electrode plate side, and the outer ribs 104a, 104b are located on the positive electrode plate side. When the positive electrode plate is stored to separator 100, the outer ribs 104a, 104b are located on the negative electrode plate side, and the inner ribs 102a to 102d are located on the positive electrode plate side. Both the configuration in which the negative electrode plate is stored to the separator 100 and the configuration in which the positive electrode plate is stored in the separator 100 are possible.

Separator 100 may be formed from a polymer material. At least the base is a porous sheet and can also be called a porous film. The separator 100 may contain a filler (e.g., a particulate filler such as silica, and/or a fibrous filler) dispersed in a matrix formed from a polymer material. The separator 100 is preferably made of a polymer material having acid resistance. As such a polymer material, a polyolefin such as polyethylene or polypropylene is preferred.

The average thickness of the base 101 is, for example, 0.15 mm or more and 0.3 mm or less, and preferably 0.18 mm or more and 0.27 mm or less. When the average thickness of the base is in such a range, the height of the inner rib, and the height of the outer ribs as necessary, are easily ensured while high charge-discharge characteristics are maintained high. The average thickness of the base is obtained by measuring the thickness of the base at five freely selected locations in a cross-sectional photograph of the separator and averaging the measured thickness.

The separator 100 has a plate region 106, a joint region 108a provided on the left end side of the separator, and a joint region 108b provided on the right end side of the separator. Joints (joint parts) 109a, 109b between the first surface and the second surface are formed in the joint regions 108a, 108b, respectively.

On the first surface and the second surface of the plate region 106, an inner rib 102a (first plate rib) and an inner rib 102b (second plate rib) are provided (cf. Figs. 2 to 5), and on the third surface of the plate region 106, an outer rib 104a is provided. When a lead-acid battery is configured, the separator 100 faces the positive electrode plate or the negative electrode plate in the plate region 106. At this time, the inner ribs 102a, 102b and the outer rib 104a prevent the base 101 from coming into direct contact with the positive electrode plate or the negative electrode plate. On the other hand, on the first surface and the second surface of the joint regions 108a, 108b, an inner rib 102c (first joint rib) and an inner rib 102d (second joint rib) are provided (cf. Figs. 2 to 5). An outer rib 104b is provided on the third surface of each of the joint regions 108a, 108b.

The separator 100 shown in Fig. 1 is formed by folding one separator sheet, with the inner ribs 102a to 102d and the outer ribs 104a, 104b previously formed thereon, into a U-shape to fold the separator sheet in two, and joining the left end side and the right end side by a method such as gear sealing. Fig. 2 schematically shows a rectangular separator sheet 110 before being folded in two and forming the joints on the left and right end sides. Note that Fig. 2 is a schematic view of the separator sheet as viewed from the surface on which the inner ribs 102a to 102d are formed, and the outer ribs 104a, 104b are not shown since being present on the back surface side.

The separator sheet 110 has a first region (a region above an axis X parallel to the short side of the separator sheet in Fig. 2) and a second region (a region below the axis X in Fig. 2). When the first region and the second region are made to face each other, the first region becomes the first surface of the bag-shaped separator, and the second region becomes the second surface of the bag-shaped separator.

As shown in Fig. 2, an inner rib 102a is provided in the plate region 106 in the first region, and an inner rib 102b is provided in the plate region 106 in the second region. The inner ribs 102c are provided in the joint regions 108a, 108b in the first region, and the inner ribs 102d are provided in the joint regions 108a, 108b in the second region. The inner ribs 102a to 102d are each formed in a linear striped pattern at predetermined intervals in a direction parallel to the long side of the separator sheet. In Fig. 2, the rib interval between the inner ribs 102c, 102d provided in the joint regions 108a, 108b has been made smaller than the rib interval between the inner ribs 102a, 102b provided in the plate region 106.

In the present embodiment, in a case where the separator sheet shown in Fig. 2 is folded in two to form the bag-shaped separator 100 shown in Fig. 1, the separator sheet is not folded along the axis X parallel to the short side of the separator sheet as the axis, but, as shown by the chain line in Fig. 2, the separator sheet is folded along an axis Y slightly shifted from the direction parallel to the short side as the axis, and the left and right end sides of the joint regions 108a, 108b are joined. As a result, when the first region and the second region are made to face each other to form a bag-shaped separator, the inner ribs 102a to 102d extend in a direction slightly inclined from the vertical direction. Also, the inner ribs 102a, 102c on the first surface and the inner ribs 102b, 102d on the second surface extend as inclined in directions opposite to each other from the vertical direction, so that when the first region and the second region are made to face each other, the inner rib 102c and the inner rib 102d can be intersected in each of the joint regions 108a, 108b. At this time, the inner ribs 102a and the inner ribs 102b intersect in the plate region 106 as well. Then, at the time of forming the joint, at least one intersection between the inner rib 102c and the inner rib 102d is included in the joint part.

At the time of joining the left and right end sides of the joint regions 108a, 108b, intersecting the inner rib 102c and the inner rib 102d at the joint part facilitates preventing one of the inner ribs 102c from being stuck into a valley between the inner ribs 102d provided at a predetermined interval on the second region, and preventing one of the inner ribs 102d from being stuck into a valley between the inner ribs 102c provided at a predetermined interval on the first region. As a result, the variation in joining strength is decreased, and the joining strength can be maintained.

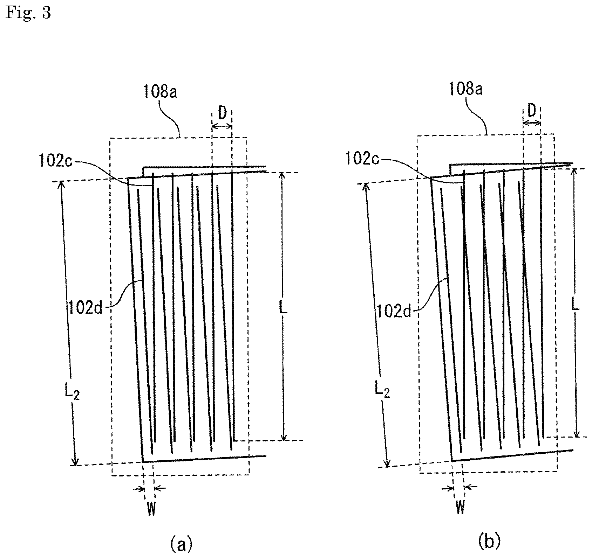

Figs. 3(a) and 3(b) each show a state of the inner ribs of the separator sheet in the joint region 108a when the first region and the second region are made to face each other. In Figs. 3(a) and 3(b), the outer ribs have been omitted to avoid the figure being complicated.

When the separator sheet shown in Fig. 2 is folded in two, in a case where the axis for folding has been shifted from the axis X parallel to the short side of the separator sheet and the shift angle is small, the inner rib 102c and the inner rib 102d may not superimpose depending on the positional relationship between the inner ribs 102c, 102d, as shown in Fig. 3(a). In this case, the inner rib 102d is stuck in a valley between the inner ribs 102c, and the inner rib 102c is stuck in a valley between the inner ribs 102d.

On the other hand, when the shift angle is large, as shown in Fig. 3(b), the inner ribs 102c, 102d intersect regardless of the positional relationship between the inner rib 102c and the inner rib 102d. In this case, the joining strength can be maintained high.

In a case where the separator sheet is folded in two, even when the shift angle of the axis for folding is the same, the relative position of the inner rib 102d with respect to the inner rib 102c varies in the horizontal direction depending on the position at which the separator sheet is folded (the position in the longitudinal direction of the separator sheet). Even when the shift angle is small, it is possible to intersect the inner rib 102c and the inner rib 102d at the joint part. However, depending on the folding position, both the case where the inner rib 102c and the inner rib 102d intersect and the case where the inner rib 102c and the inner rib 102d do not intersect (Fig. 3(a)) may occur, so that the joining strength may vary. However, as compared to the case where the separator sheet is folded along X as the axis, the variation in joining strength has been decreased.

It is assumed that the interval at which the inner ribs 102c are provided is D, and the length of the inner ribs 102c is L. Assuming that the shift angle of the axis Y, along which the separator sheet is folded, from the direction X parallel to the short side is $\theta$, the inner rib 102c and the inner rib 102d are inclined by $\theta$ in directions opposite to each other, and hence the intersection angle is $2\theta$. In this case, when

$$\tan 2\theta \geq D/L$$

is satisfied, the inner rib 102c and the inner rib 102d can be reliably intersected at one or more locations, so that the joining strength can be increased and the variation in joining strength can be maintained low. In this case, when the width of the joint part from the end of the separator sheet is set so as to include the inner rib 102d located second from the end side, the joint part includes at least one intersection of the inner rib 102c and the inner rib 102d. Assuming that the distance to the end of the inner rib 102d located closest to the end side is W, the joint part may be set to a region including the end and having a width of D + W or more. Further, for preventing the generation of a non-joint portion, the width of the joint part is preferably set so as to exceed the shift of the end of the separator ($L_2 \tan 2\theta$, where the length of the end of the separator on the joint part side is $L_2$ when the separator is folded in two).

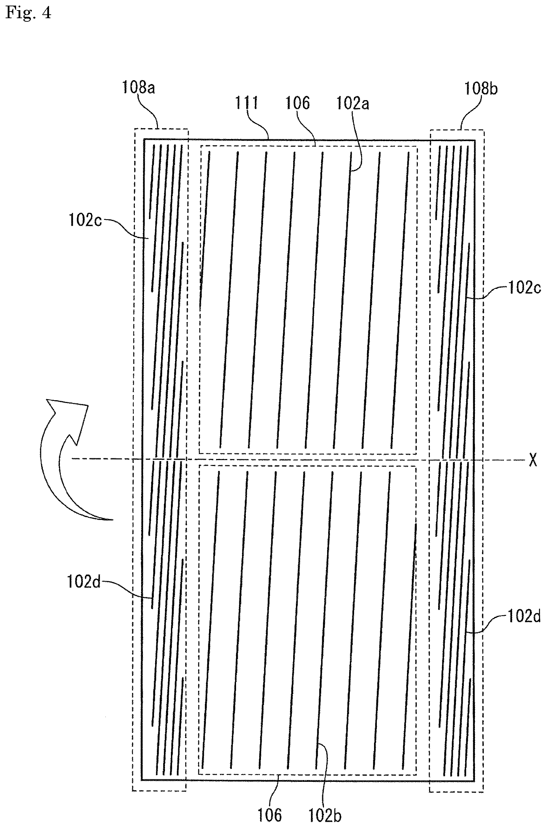

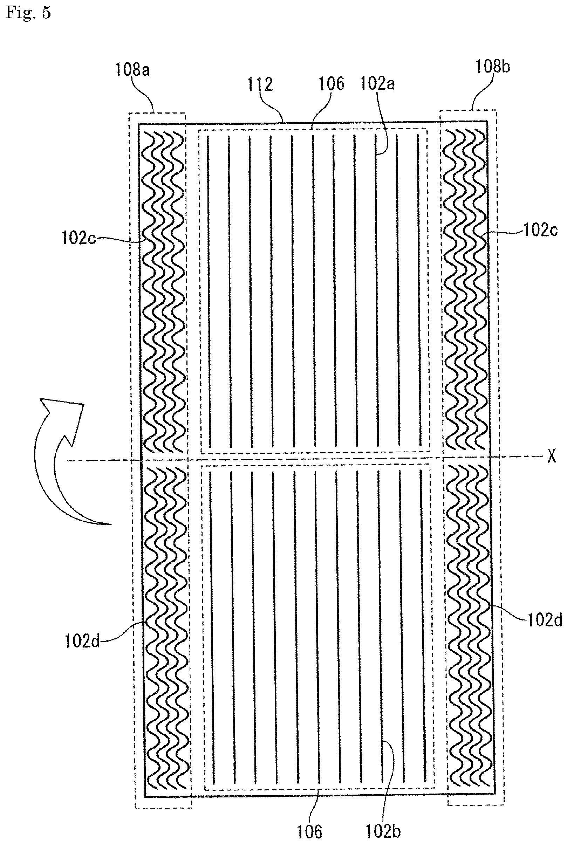

Fig. 4 and Fig. 5 are schematic views showing an embodiment of the separator sheet different from Fig. 2. In the separator sheet 111 shown in Fig. 4, the inner ribs 102a to 102d are not extended in the direction parallel to the long side of the separator sheet (vertical direction) as shown in Fig. 2, but are extended in a direction slightly inclined from the direction parallel to the long side. In this case, when the separator sheet 111 is folded in two along the axis X parallel to the short side of the separator sheet as the axis, the inner ribs 102a, 102c in the first region and the inner ribs 102b, 102d in the second region extend as inclined in the directions opposite to each other from the vertical direction. Therefore, when the first region and the second region are made to face each other and the joint is formed on each of the left and right end sides, the inner rib 102c and the inner rib 102d can be intersected at the joint parts in the joint regions 108a, 108b. At this time, in the plate region 106, the inner ribs 102a and the inner ribs 102b intersect.

In Fig. 4, the axis along which the separator sheet 111 is folded in two may be inclined from the direction parallel to the short side of the separator sheet, like the axis Y shown in Fig. 2. The angle at which the inner rib 102c and the inner rib 102d intersect can be increased, and the inner rib 102c and the inner rib 102d can be easily intersected at the joint part.

In a separator sheet 112 shown in Fig. 5, the inner ribs 102c, 102d in the joint region do not have a striped pattern of straight lines, but have a striped pattern of curved line extending substantially in the vertical direction while waving. In this case, when the separator sheet is folded in two along the direction parallel to the short side of the separator sheet as the axis and the first region and the second region are made to face each other, in the joint regions 108a, 108b, one inner rib 102c can be intersected with one or more inner ribs 102d at a plurality of locations. Further, one inner rib 102d can be intersected with one or more inner ribs 102c at a plurality of locations. Since the number of intersections increases, the variation in joining strength are further decreased, and the high joining strength can be maintained.

The average height of the inner ribs in the joint region is preferably 0.05 mm or more from the viewpoint of the thrust strength at the end, and is preferably 0.5 mm or less from the viewpoint of preventing joining failure due to insufficient joining energy or the like. The inner ribs in the plate region preferably has an average height of 0.3 mm or more when facing the positive electrode plate in order to prevent the oxidation degradation, and preferably has an average height of 0.05 mm or more when facing the negative electrode plate in order to prevent the permeation short circuit. Meanwhile, the inner rib in the plate region preferably has an average height of 0.5 mm or less from the viewpoint of maintaining the discharge capacity high. The height of the inner rib refers to a distance from one main surface (first region or second region) of the base of the separator sheet at a predetermined position of the inner rib to the top of the inner rib. The average height of the inner ribs is obtained by averaging the heights of the inner ribs measured at ten arbitrarily selected positions of the inner ribs on one main surface of the base.

Figs. 2 to 5 have illustrated the striped patterns as the patterns of the inner ribs 102a to 102d. However, the pattern of the inner rib is not particularly limited. The inner ribs may be formed randomly, or may be formed in stripes, a curved shape, a grid shape, or the like. Further, as illustrated in Fig. 5, the pattern of the inner rib may be different between the plate region and the joint region. From the viewpoint of making the electrolyte solution more easily diffused, a plurality of inner ribs are preferably formed so as to be arranged in stripes at least in the plate region in the first region or in the second region. The orientation of the striped inner ribs is not particularly limited, but, for example, the plurality of inner ribs may be formed along the height direction or the width direction. From the viewpoint of preventing an increase in internal resistance due to stagnation of gas generated during charge, the plurality of inner ribs are preferably formed in stripes along the height direction. On the other hand, from the viewpoint of preventing sedimentation of high-concentration sulfuric acid generated during charge and preventing stratification, it is preferable to form the plurality of inner ribs in stripes along the width direction. The height direction refers to a direction in which the opening of the bag-shaped separator is present, and the width direction refers to a direction perpendicular to the height direction.

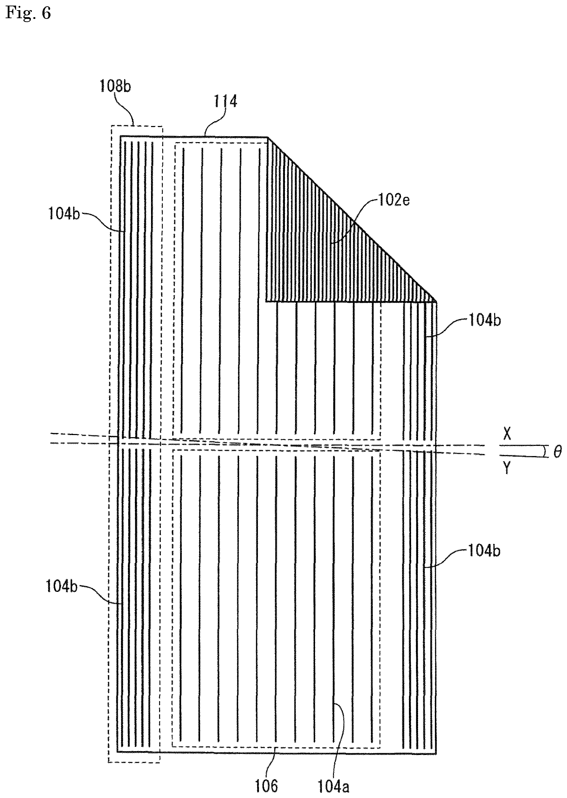

Fig. 6 is a schematic diagram showing an embodiment of the separator sheet different from those of Figs. 2, 4, and 5. Fig. 6 is a view of the separator sheet 114 as viewed from the third region (fourth region) side, and the state of the first region (second region) side is also shown by folding an upper-right right-angled triangular region toward the paper surface side. The first region and the second region are made to face each other by folding (mountain-folding) the separator sheet in two so that the paper surface side of the separator sheet 114 becomes the outer surface and the back surface side of the paper surface becomes the inner surface, thereby forming a bag-shaped separator. At this time, one of the inner surfaces, facing each other, of the two-folded separator sheet 114 constitutes the first surface, and the other constitutes the second surface. Of the outer surfaces of the two-folded separator sheet 114, the outer surface located at a position separated from the first surface constitutes the third surface, and the outer surface located at a position separated from the second surface constitutes a fourth surface.

In the separator sheet 114 shown in Fig. 6, a plurality of outer ribs 104a, 104b are formed so as to be arranged in stripes along the height direction (a direction parallel to the long side of the sheet). On the other hand, a plurality of inner ribs 102e are formed so as to be arranged in stripes along the width direction (a direction parallel to the short side of the sheet). The interval between the inner ribs 102e is the same for both the joint region and the plate region. On the other hand, the interval between the outer ribs 104b in the joint region is smaller than the outer rib 104a in the plate region. The separator sheet 114 is suitably used when the negative electrode plate is stored in the bag-shaped separator. Also, in the separator sheet 114, the inner ribs 102e facing each other can be intersected by folding the separator sheet in the direction Y slightly shifted from the direction parallel to the short side of the separator sheet as the axis to form a joint part.

It is conceivable that by using the separator sheets shown in Fig. 2 and Figs. 4 to 6, the plurality of inner ribs may extend in the direction slightly inclined from the height direction of the bag-shaped separator, or may be slightly inclined from the width direction. However, even in such a case, the effects described above can be obtained.

The interval between the striped or grid-shaped inner ribs is preferably 0.5 mm or more and 10 mm or less in the plate region from the viewpoint of the thrust strength, oxidation resistance, and resistance to permeation short circuit. For example, the inner ribs are preferably formed at such an interval in 70% or more of the area of the plate region.

In contrast, the interval of the inner ribs in the joint region is preferably made smaller than the interval of the inner ribs in the plate region, because the inner ribs can be reliably intersected and the number of intersections can be increased. Specifically, the interval between the striped or grid-shaped inner ribs in the joint region is smaller than the interval between the inner ribs in the plate region and is preferably 0.5 mm or more and 2.0 mm or less.

The interval between the inner ribs is a distance between the tops of the adjacent first ribs or the second ribs (more specifically, the distance between the centers of the adjacent inner ribs in a direction crossing the inner ribs).

The outer ribs preferably have an average height of 0.3 mm or more when facing the positive electrode plate in the plate region in order to prevent the oxidation degradation, and preferably has an average height of 0.05 mm or more when facing the negative electrode plate in order to prevent the permeation short circuit. Meanwhile, the outer ribs in the plate region preferably has an average height of 0.5 mm or less from the viewpoint of maintaining high charge-discharge characteristics. The average height of the outer ribs in the joint region is preferably 0.05 mm or more from the point of the thrust strength at the end, and is preferably 0.5 mm or less from the viewpoint of preventing joining failure due to insufficient joining energy or the like.

Note that the average height of the outer ribs is obtained in accordance with the case of the inner rib. The height of the outer rib refers to the distance from the main surface (third region or fourth region) of the base of the separator sheet to the top of the outer rib at a predetermined position of the outer rib, according to the case of the inner rib.

The pattern and orientation of the outer ribs are not particularly limited similarly to the case of the inner ribs. For example, the inner rib can be selected from those described above. The interval between the striped or grid-shaped outer ribs is preferably 0.5 mm or more and 10 mm or less in the plate region from the viewpoints of the thrust strength, oxidation resistance, and resistance to permeation short circuit. For example, the outer ribs having such a pitch are preferably formed in 70% or more of the area of the plate region.

In contrast, it is preferable that the interval between the outer ribs in the joint region be smaller than the interval between the outer ribs in the plate region and be 0.5 mm or more and 2.0 mm or less, from the viewpoint of increasing the compression ratio when the joining is performed by the crimping method or the like, and increasing the joining strength.

The interval between the outer ribs is a distance between the tops of the adjacent third ribs or the fourth ribs (more specifically, the distance between the centers of the adjacent outer ribs in a direction crossing the outer ribs).

Unless otherwise specified, the ranges of the interval and the height of the inner rib and the ranges of the interval and the height of the outer rib described above are suitable ranges particularly when the separator stores the negative electrode plate. When the separator stores the positive electrode plate, the ranges of the interval and the height of the outer ribs in the plate region described above can be selected as the ranges of the interval and the height of the inner ribs in the plate region, and the ranges of the interval and the height of the inner ribs in the plate region described above can be selected as the ranges of the interval and the height of the outer ribs in the plate region.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by transferring with a roller or the like that has a groove corresponding to the rib after the molding into a sheet shape or the removal of the pore-forming additive. When a filler is used, the filler is preferably added to the resin composition.

Hereinafter, an example of the lead-acid battery using the bag-shaped separator manufactured by the method of the present embodiment will be described in detail for each of the main components, but the present invention is not limited to the following embodiments. Further, since the bag-shaped separator described above is used as the separator of the lead-acid battery, components other than the separator will be described.

(Electrolyte solution)

The electrolyte solution contains sulfuric acid in the aqueous solution. The electrolyte solution may be gelled if necessary. The electrolyte solution may contain an additive used for a lead-acid battery, if necessary.

The specific gravity at 20°C of the electrolyte solution in a fully charged lead-acid battery after chemical conversion is, for example, 1.10 $g/cm^3$ or more and 1.35 $g/cm^3$ or less.

(Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives such as antimony (Sb).

A non-chemically converted paste-type positive electrode plate is obtained in such a manner that a positive electrode current collector is filled with a positive electrode paste, which is then cured and dried, according to the case of the negative electrode plate. The positive electrode paste is prepared by kneading lead powder, an additive, water, and sulfuric acid.

A non-chemically converted clad-type positive electrode plate is formed by mixing an additive and lead powder or slurry-like lead powder in a spine inserted tube as necessary, filling the mixture, and joining a plurality of tubes with a joint.

Thereafter, the positive electrode plate is formed by chemically converting a non-chemically converted positive electrode plate.

(Negative electrode plate)

The negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these.

Chemical conversion can be performed by storing non-chemically converted positive and negative electrode groups into the container of the lead-acid battery. After the connection between the cells or the welding of the lid, the container may be filled with the electrolyte solution, and the chemical conversion may be performed in the container. Alternatively, the lead-acid battery or the electrode group may be assembled after the positive and negative electrode plates are chemically converted individually.

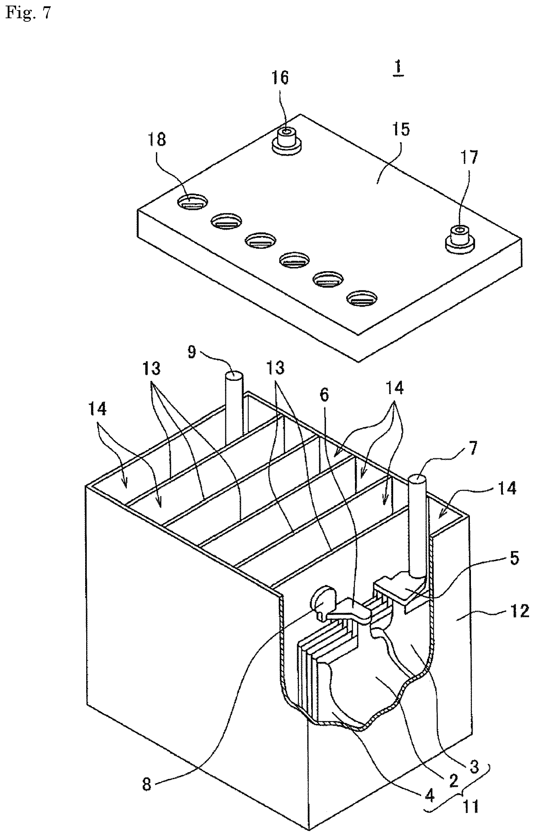

Fig. 7 shows an external view of an example of the lead-acid battery using the bag-shaped separator.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the bag-shaped separator 4 may store the positive electrode plate 3. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

[Example]

Hereinafter, the present invention will be specifically described based on examples and comparative examples, but the present invention is not limited to the following examples.

< <Lead-acid battery A 1 > >

(1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were both 0.2% by mass. The carbon black and the organic expander were then mixed into the negative electrode paste.

(2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

(3) Production of separator

One separator sheet formed from a polyethylene microporous film and having ribs formed on both surfaces was folded in two, and the left and right ends were joined to form a bag-shaped separator S1. A separator sheet as follows was used: on the separator sheet shown in Fig. 2, the interval between the inner ribs was set to 2.0 mm in the plate region and 1.0 mm in the joint region (a peripheral region of 5 mm from each of the left and right ends), and the height of the inner rib was set to 0.1 mm in both the plate region and the joint region. The interval between the outer ribs was set to 8.0 mm in the plate region and 1.0 mm in the joint region, and the height of the outer rib was set to 0.4 mm in the plate region and 0.2 mm in the joint region. The average thickness of the base of the separator was 0.25 mm.

Protrusions of all the ribs including the inner ribs and the outer ribs each had a substantially trapezoidal shape in cross section, and the width of the rib was set to 0.25 mm at the bottom of the separator base surface and set to 0.15 mm at the top. The ribs were arranged in the first region to the fourth region in the separator sheet such that the inner ribs were formed on both surfaces (first surface and second surface) of the inner surface of the bag-shaped separator, and the outer ribs were formed on both surfaces (third surface and fourth surface) of the outer surface. The separator sheet had a rectangular shape with a long side length of 250 mm and a short side length of 152 mm, and all ribs were formed parallel to the long side of the separator sheet to have a linearly extending striped pattern.

At the time of folding the separator sheet in two, a direction in which the separator sheet was folded was slightly shifted from the direction parallel to the short side, and the sheet was folded so that the inner ribs facing each other did not superimpose (Fig. 3(a)). Thereafter, the 3 mm regions at the left and right ends were joined by the gear sealing method to obtain a bag-shaped separator. The length L of the inner rib excluding the folding margin was 124 mm in both the first region and the second region, both the joint region and the plate region, and the interval D between the tops of the inner ribs in the joint region was 1.0 mm as described above. The distance W of the top of the inner rib located closest to the end side from the end was 0.4 mm. The shift angle $\theta$ of the axis Y, along which the separator sheet was folded, from the direction X parallel to the short side was 0.2° (angle $2\theta$ between inner ribs = 0.4°).

The separator sheet was folded while the non-chemically converted negative electrode plate was pressed onto the first region of the separator sheet, the left and right ends were joined, and the bag-shaped processing of the separator and the storage of the negative electrode plate were performed in parallel.

(4) Production of lead-acid battery

The bag-shaped separator S1 storing the negative electrode plate and the positive electrode plate were stacked, and an electrode group was formed by eight non-chemically converted negative electrode plates and eight non-chemically converted positive electrode plates per cell.

The electrode group was inserted into a container made of polypropylene, the container was filled with an electrolyte solution, and chemical conversion was performed in the container, to assemble a flooded-type lead-acid battery A1 having a nominal voltage of 12 V and a nominal capacity of 48 Ah (five-hour rate).

<<Lead-acid battery A2>>

In production of a separator S1, the axis along which the separator sheet is folded in two was changed at the time of folding the separator sheet in two. The shift angle $\theta$ of the axis Y, along which the separator sheet was folded, from the direction X parallel to the short side was set to 0.5° (intersection angle $2\theta$ between inner ribs = 1°) so that the inner ribs facing each other intersected (Fig. 3(b)). Except for this, a lead-acid battery A2 was produced similarly to the lead-acid battery A1.

< <Lead-acid battery A3>>

A bag-shaped separator different from the separator S 1 was prepared.

One separator sheet formed from a polyethylene microporous film and having ribs formed on both surfaces was folded in two, and the left and right ends were joined to form a bag-shaped separator S2. A separator sheet as follows was used: on the separator sheet shown in Fig. 6, the interval between the inner ribs was set to 0.5 mm in both the plate region and in the joint region (a peripheral region of 5 mm from each of the left and right ends), and the height of the inner rib was set to 0.1 mm in both the plate region and the joint region. The interval between the outer ribs was set to 8.0 mm in the plate region and 0.5 mm in the joint region, and the height of the outer rib was set to 0.4 mm in the plate region and 0.2 mm in the joint region. The average thickness of the base of the separator was 0.25 mm.

Protrusions of all the ribs including the inner ribs and the outer ribs each had a substantially trapezoidal shape in cross section, and the width of the rib was set to 0.2 mm at the bottom of the separator base surface and set to 0.1 mm at the top. The ribs were arranged in the first region to the fourth region in the separator sheet such that the inner ribs were formed on both surfaces (first surface and second surface) of the inner surface of the bag-shaped separator, and the outer ribs were formed on both surfaces (third surface and fourth surface) of the outer surface. The separator sheet had a rectangular shape with a long side length of 250 mm and a short side length of 152 mm, and all inner ribs were formed perpendicular to the long side of the separator sheet and all the outer ribs were formed parallel to the long side of the separator sheet, to have a linearly extending striped pattern.

At the time of folding the separator sheet in two, a direction in which the separator sheet was folded was slightly shifted from the direction parallel to the short side, and the sheet was folded so that the inner ribs facing each other did not superimpose. Thereafter, the 3 mm regions at the left and right ends were joined by the gear sealing method to obtain a bag-shaped separator. The length L of the inner rib excluding the folding margin was 152 mm, which was equal to the length of the short side of the separator sheet, in both the first region and the second region, both the joint region and the plate region, and the interval D between the tops of the inner ribs in the joint region was 0.5 mm as described above. The distance W of the top of the inner rib located closest to the end side from the end was 0 mm. The shift angle $\theta$ of the axis Y, along which the separator sheet was folded, from the direction X parallel to the short side was 0.05° (angle $2\theta$ between inner ribs = 0.1°). The length L of the outer rib excluding a folding margin was 124 mm in both the joint region and the main region, and the interval between the tops of the outer ribs in the joint region was 0.5 mm as described above. The distance of the top of the outer rib located closest to the end side from the end was 0.4 mm.

A negative electrode plate was stored into the separator S2 to form an electrode group, and a lead-acid battery A3 was produced.

<<Lead-acid battery A4>>

In production of the separator S2, the axis along which the separator sheet is folded in two was changed at the time of folding the separator sheet in two. The shift angle $\theta$ of the axis Y, along which the separator sheet was folded, from the direction X parallel to the short side was set to 0.5° (intersection angle $2\theta$ between inner ribs = 1°) so that the inner ribs facing each other intersected. Except for this, a lead-acid battery A4 was produced similarly to the lead-acid battery A3.

< <Lead-acid battery B1> >

A lead-acid battery B1 was produced similarly to the lead-acid battery A1, except that the positive electrode plate was stored into the separator S 1 to form the electrode group.

<<Lead-acid battery B2>>

A lead-acid battery B2 was produced similarly to the lead-acid battery A2, except that the positive electrode plate was stored into the separator S 1 to form the electrode group.

In the lead-acid batteries B1 and B2, the interval between the inner ribs of the separator sheet was set to 8.0 mm in the plate region and 1.0 mm in the joint region (a peripheral region of 5 mm from the each of the left and right ends), and the height of the inner rib was set to 0.4 mm in the plate region and 0.2 mm in the joint region. Further, the interval between the outer ribs was set to 2.0 mm in the plate region and 1.0 mm in the joint region, and the height of the outer rib was set to 0.1 mm in both the plate region and the joint region.

<<Lead-acid battery B3>>

In preparation of the separator S2, the direction in which the separator sheet was folded was reversed to prepare the separator S3. That is, in the separator S3, the relationship between the inner ribs and the outer ribs is opposite to that of the separator S2, the inner ribs linearly extend parallel to the long side of the separator sheet, and the outer ribs linearly extend perpendicular to the long side of the separator sheet. The interval, height, and length of the inner ribs in the separator S3 are the same as the interval, height, and length of the outer ribs in the separator S2, respectively, and the interval, height, and length of the outer ribs in the separator S3 are the same as the interval, height, and length of the inner rib in the separator S2, respectively.

A lead-acid battery B3 was produced similarly to the lead-acid battery A3, except that the positive electrode plate was stored into the separator S3 to form the electrode group.

<<Lead-acid battery B4>>

A lead-acid battery B4 was produced similarly to the lead-acid battery A4, except that the positive electrode plate was stored into the separator S3 to form the electrode group.

[Evaluation 1: Bottom short circuit caused by vibration]

A heavy loading life test specified in Japanese Industrial Standards (JIS) D 5301: 2006 was performed 150 cycles, and thereafter, the following vibration test was performed to compare an occurrence ratio of a bottom short circuit.

Vibration direction: simple vertical vibration
Acceleration: 6 G
Vibration frequency: 30 Hz
Excitation time: 2 hours

[Evaluation 2: Resistance to permeation short circuit]

Charge and discharge were repeated in the following cycle to evaluate the number of cycles by which the permeation short circuit occurred.

1. Discharge: 9.6 A (final voltage: 10.5 V)

2. Constant resistance discharge: 10 $\Omega$ resistance connection x 7 days

3. Charge: 14.4 V/50 A x 60 minutes

1 to 3 above were repeated as one cycle, and the number of cycles was obtained at the time when the charge current and voltage fluctuated due to the occurrence of the permeation short circuit. The resistance to permeation short circuit of each lead-acid battery was evaluated by a relative ratio with the number of cycles of the lead-acid battery A1 being 100.

Table 1 shows the results of the evaluations 1 and 2 of the lead-acid batteries A1 to A4 and B1 to B4.

[Table 1]

| Battery | Stored in separator | Intersection of ribs | Bottom short circuit occurrence rate in vibration test [%] | Cycle number at occurrence of permeation short circuit [%] |
|---------|---------------------|----------------------|-----------------------------------------------------------|------------------------------------------------------------|
| A1 | Negative electrode plate | No | 20 | 100 |
| A2 | Negative electrode plate | Yes | 0 | 120 |
| A3 | Negative electrode plate | No | 20 | 100 |
| A4 | Negative electrode plate | Yes | 0 | 120 |
| B1 | Positive electrode plate | No | 20 | 120 |
| B2 | Positive electrode plate | Yes | 0 | 120 |
| B3 | Positive electrode plate | No | 20 | 120 |

(continued)

| Battery | Stored in separator | Intersection of ribs | Bottom short circuit occurrence rate in vibration test [%] | Cycle number at occurrence of permeation short circuit [%] |
|---|---|---|---|---|
| B4 | Positive electrode plate | Yes | 0 | 120 |

As shown in Table 1, in the lead-acid batteries A2 and A4 in which the inner ribs were arranged so as to intersect in the joint region, no bottom short circuit occurred in the vibration test. It is conceivable that this is because, since the joining strength of the bag-shaped separator has been improved, the seal at the end of the separator does not come off, thus preventing a short circuit due to the contact between the negative electrode plate and a precipitate derived from the positive active material deposited at the bottom of the container by the heavy loading life test. In contrast, in the lead-acid batteries A1 and A3, the bottom short circuit occurred with a high probability of 20%. It is conceivable that this is because, with the joining strength of the bag-shaped separator being not sufficient, the joining of the bag-shaped separator partially came off during the vibration test, and the precipitate derived from the positive active material came into contact with the negative electrode plate through the portion where the joining had come off, leading to the occurrence of the short circuit.

Furthermore, in the lead-acid batteries A2 and A4, the resistance to permeation short circuit has also been improved as compared to the lead-acid batteries A1 and A3. It is conceivable that this is because the crimped part after the gear sealing becomes slightly thicker due to the intersection of the inner ribs, so that the distance between the negative electrode plate and the separator becomes slightly wider in the joint region at the separator end or in the region between the joint region and the plate region, thereby preventing the contact between the negative electrode plate and the separator around the end and preventing the permeation short circuit.

As described above, the method for manufacturing a bag-shaped separator of the present embodiment has a remarkable effect when the bag-shaped separator stores the negative electrode plate, and can partially solve a unique problem that occurs in the lead-acid battery configured to store the negative electrode plate in the bag-shaped separator.

When the positive electrode plate was stored into the bag-shaped separator to manufacture a lead-acid battery by the same method, and a vibration test was similarly performed to evaluate the resistance to permeation short circuit, the results shown in the lead-acid batteries B1 to B4 in Table 1 were obtained. As in the case where the negative electrode plate is stored into the bag-shaped separator, the bottom short circuit is prevented by intersecting the inner ribs at the joint part. On the other hand, when the positive electrode plate is stored into the bag-shaped separator, the distance between the negative electrode plate and the separator at the end of the separator is sufficiently ensured by not storing the negative electrode plate. Therefore, the lead-acid batteries B2 and B4 in which the inner ribs are intersected at the joint part and the lead-acid batteries B1 and B3 in which the inner ribs are not intersected at the joint part both obtained resistance to permeation short circuit which was equivalent to those of the lead-acid batteries A2 and A4.

INDUSTRIAL APPLICABILITY

The method for manufacturing a lead-acid battery according to one aspect of the present invention is applicable to the manufacturing of a separator used in a valve regulated lead-acid battery and a flooded-type lead-acid battery, and can be suitably used as a power source for starting an automobile, a motorcycle, or the like.

DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container

13: partition
14: cell chamber
15: lid
16: negative electrode terminal
17: positive electrode terminal
18: vent plug
100: separator
101: base
102a to 102e: inner rib
104a, 104b: outer rib
106: plate region
108a, 108b: joint region
109a, 109b: joining
110 to 112, 114: separator sheet

## Claims

1. A method for manufacturing a lead-acid battery (1) having an electrode group in which a plurality of positive electrode plates (3) and a plurality of negative electrode plates (2) are stacked via a separator (4, 100),

   the method comprising
   processing the separator (4, 100) into a bag shape having a first region and a second region facing each other, wherein
   the step of processing the separator (4, 100) into a bag shape includes forming a joint part (109a, 109b) that includes at least a part of the first region and at least a part of the second region,
   a plurality of first ribs (102a, 102c) are provided in the first region,
   a plurality of second ribs (102b, 102d) are provided in the second region, and
   the step of forming the joint part (109a, 109b) includes making the first region and the second region face each other so that at least one of the first ribs (102c) and at least one of the second ribs (102d) intersect at the joint part (109a, 109b).

2. The method for manufacturing a lead-acid battery (1) according to claim 1, wherein

   the step of forming the joint part (109a, 109b) includes folding one quadrangular separator sheet (101) in two, the separator sheet (101) having the first region and the second region on the same main surface and having parallel opposite sides, along a direction (Y) inclined from a direction (X) perpendicular to the opposite sides as an axis to make the first region and the second region face each other, and
   both the first rib (102c) and the second rib (102d) linearly extend in the same direction on the main surface in a region in the first region of the separator sheet (101) where at least the joint part (109a, 109b) is provided and in a region in the second region of the separator sheet (101) where at least the joint part (109a, 109b) is provided.

3. The method for manufacturing a lead-acid battery (1) according to claim 2, wherein both the first rib (102c) and the second rib (102d) extend on the main surface in a direction parallel to the opposite sides in the region in the first region of the separator sheet (101) where at least the joint part (109a, 109b) is provided and in the region in the second region of the separator sheet (101) where at least the joint part (109a, 109b) is provided.

4. The method for manufacturing a lead-acid battery (1) according to claim 2, wherein both the first rib (102c) and the second rib (102d) extend on the main surface in a direction perpendicular to the opposite sides in the region in the first region of the separator sheet (101) where at least the joint part (109a, 109b) is provided and in the region in the second region of the separator sheet (101) where at least the joint part (109a, 109b) is provided.

5. The method for manufacturing a lead-acid battery (1) according to any one of claims 1 to 4, wherein an outer shape of the first region is a quadrangle, and the joint part (109a, 109b) is provided in each of regions near at least two sides constituting the quadrangle.

6. The method for manufacturing a lead-acid battery (1) according to any one of claims 1 to 5, wherein

a joint region (108a, 108b) provided with the joint part (109a, 109b) and a plate region (106) separated from the joint region (109a, 109b) are provided in each of the first region and the second region, and
the first ribs (102a, 102c) include
a plurality of first joint ribs (102c) provided at a regular interval in the joint region (108a, 108b) in the first region, and
a plurality of first plate ribs (102a) are provided at a regular interval in the plate region (106) in the first region, and
the interval at which the first joint ribs (102c) are provided is smaller than the interval at which the first plate ribs (102a) are provided.

7. The method for manufacturing a lead-acid battery (1) according to claim 6, wherein

the second rib (102b, 102d) includes
a plurality of second joint ribs (102d) provided at a regular interval in the joint region (108a, 108b) in the second region, and
a plurality of second plate ribs (102b) provided at a regular interval in the plate region (106) in the second region, and
the interval at which the second joint ribs (102d) are provided is smaller than the interval at which the second plate ribs (102b) are provided.

8. The method for manufacturing a lead-acid battery (1) according to any one of claims 1 to 7, wherein

a third region is provided on a back surface of the first region, and a fourth region is provided on a back surface of the second region,
a plurality of third ribs (104a, 104b) are provided in the third region, and
a plurality of fourth ribs are provided in the fourth region.

9. The method for manufacturing a lead-acid battery (1) according to claim 8, wherein the third ribs (104a, 104b) are provided in the third region corresponding to a region where at least the joint part (109a, 109b) is provided in the first region.

10. The method for manufacturing a lead-acid battery (1) according to any one of claims 1 to 9, wherein the step of forming the joint part (109a, 109b) includes joining at least a part of the first region and at least a part of the second region by crimping or welding.

11. The method for manufacturing a lead-acid battery (1) according to any one of claims 1 to 10, further comprising disposing the negative electrode plate (2) such that the negative electrode plate (2) is stored in the separator (4, 100) processed in a bag shape.

**Patentansprüche**

1. Verfahren zum Herstellen einer Blei-Säure-Batterie (1) mit einer Elektrodengruppe, in der mehrere positive Elektrodenplatten (3) und mehrere negative Elektrodenplatten (2) über einen Separator (4, 100) gestapelt sind,

wobei das Verfahren umfasst
Verarbeiten des Separators (4, 100) zu einer Beutelform mit einem ersten Bereich und einem zweiten Bereich, die einander gegenüberliegen,
wobei
der Schritt des Verarbeitens des Separators (4, 100) zu einer Beutelform ein Bilden eines Verbindungsteils (109a, 109b) umfasst, der mindestens einen Teil des ersten Bereichs und mindestens einen Teil des zweiten Bereichs umfasst,
mehrere erste Rippen (102a, 102c) in dem ersten Bereich vorgesehen sind,
mehrere zweite Rippen (102b, 102d) in dem zweiten Bereich vorgesehen sind und
der Schritt des Bildens des Verbindungsteils (109a, 109b) umfasst, dass der erste Bereich und der zweite Bereich einander zugewandt hergestellt werden, so dass mindestens eine der ersten Rippen (102c) und mindestens eine der zweiten Rippen (102d) sich an dem Verbindungsteil (109a, 109b) schneiden.

2. Verfahren zum Herstellen einer Blei-Säure-Batterie (1) nach Anspruch 1, wobei

der Schritt des Bildens des Verbindungsteils (109a, 109b) ein Falten eines viereckigen Separatorblatts (101) in zwei umfasst, wobei das Separatorblatt (101) den ersten Bereich und den zweiten Bereich auf der gleichen Hauptfläche aufweist und parallele gegenüberliegende Seiten aufweist, entlang einer Richtung (Y), die von einer Richtung (X) senkrecht zu den gegenüberliegenden Seiten als eine Achse geneigt ist, um den ersten Bereich und den zweiten Bereich einander gegenüberliegend herzustellen, und

sich sowohl die erste Rippe (102c) als auch die zweite Rippe (102d) linear in die gleiche Richtung auf der Hauptfläche in einem Bereich in dem ersten Bereich des Separatorblatts (101) erstrecken, in dem mindestens der Verbindungsteil (109a, 109b) vorgesehen ist, und in einem Bereich in dem zweiten Bereich des Separatorblatts (101), in dem mindestens der Verbindungsteil (109a, 109b) vorgesehen ist.

3. Verfahren zum Herstellen einer Blei-Säure-Batterie (1) nach Anspruch 2, wobei sich sowohl die erste Rippe (102c) als auch die zweite Rippe (102d) auf der Hauptfläche in eine Richtung parallel zu den gegenüberliegenden Seiten in dem Bereich in dem ersten Bereich des Separatorblatts (101) erstrecken, in dem mindestens der Verbindungsteil (109a, 109b) vorgesehen ist, und in dem Bereich in dem zweiten Bereich des Separatorblatts (101), in dem mindestens der Verbindungsteil (109a, 109b) vorgesehen ist.

4. Verfahren zum Herstellen einer Blei-Säure-Batterie (1) nach Anspruch 2, wobei sich sowohl die erste Rippe (102c) als auch die zweite Rippe (102d) auf der Hauptfläche in eine Richtung senkrecht zu den gegenüberliegenden Seiten in dem Bereich in dem ersten Bereich des Separatorblatts (101) erstrecken, in dem mindestens der Verbindungsteil (109a, 109b) vorgesehen ist, und in dem Bereich in dem zweiten Bereich des Separatorblatts (101), in dem mindestens der Verbindungsteil (109a, 109b) vorgesehen ist.

5. Verfahren zum Herstellen einer Blei-Säure-Batterie (1) nach einem der Ansprüche 1 bis 4, wobei eine äußere Form des ersten Bereichs ein Viereck ist und der Verbindungsteil (109a, 109b) in jedem der Bereiche in der Nähe von mindestens zwei Seiten, die das Viereck bilden, vorgesehen ist.

6. Verfahren zum Herstellen einer Blei-Säure-Batterie (1) nach einem der Ansprüche 1 bis 5, wobei

ein Verbindungsbereich (108a, 108b), der mit dem Verbindungsteil (109a, 109b) versehen ist, und ein Plattenbereich (106), der von dem Verbindungsbereich (109a, 109b) getrennt ist, sowohl in dem ersten Bereich als auch in dem zweiten Bereich vorgesehen sind, und die ersten Rippen (102a, 102c) umfassen

mehrere erste Verbindungsrippen (102c), die in einem regelmäßigen Abstand in dem Verbindungsbereich (108a, 108b) in dem ersten Bereich vorgesehen sind, und mehrere erste Plattenrippen (102a), die in einem regelmäßigen Abstand in dem Plattenbereich (106) in dem ersten Bereich vorgesehen sind, und

der Abstand, in dem die ersten Verbindungsrippen (102c) vorgesehen sind, kleiner ist als der Abstand, in dem die ersten Plattenrippen (102a) vorgesehen sind.

7. Verfahren zum Herstellen einer Blei-Säure-Batterie (1) nach Anspruch 6, wobei

die zweite Rippe (102b, 102d) umfasst

mehrere zweite Verbindungsrippen (102d), die in einem regelmäßigen Abstand in dem Verbindungsbereich (108a, 108b) in dem zweiten Bereich vorgesehen sind, und mehrere zweite Plattenrippen (102b), die in einem regelmäßigen Abstand in dem Plattenbereich (106) in dem zweiten Bereich vorgesehen, und

der Abstand, in dem die zweiten Verbindungsrippen (102d) vorgesehen sind, kleiner ist als der Abstand, in dem die zweiten Plattenrippen (102b) vorgesehen sind.

8. Verfahren zum Herstellen einer Blei-Säure-Batterie (1) nach einem der Ansprüche 1 bis 7, wobei

ein dritter Bereich auf einer Rückfläche des ersten Bereichs vorgesehen ist und ein vierter Bereich auf einer Rückfläche des zweiten Bereichs vorgesehen ist,
mehrere dritte Rippen (104a, 104b) in dem dritten Bereich vorgesehen sind und
mehrere vierte Rippen in dem vierten Bereich vorgesehen sind.

9. Verfahren zum Herstellen einer Blei-Säure-Batterie (1) nach Anspruch 8, wobei die dritten Rippen (104a, 104b) in dem dritten Bereich vorgesehen sind, der einem Bereich entspricht, in dem mindestens der Verbindungsteil (109a, 109b) in dem ersten Bereich vorgesehen ist.

10. Verfahren zum Herstellen einer Blei-Säure-Batterie (1) nach einem der Ansprüche 1 bis 9, wobei der Schritt des Bildens des Verbindungsteils (109a, 109b) ein Verbinden mindestens eines Teils des ersten Bereichs und mindestens eines Teils des zweiten Bereichs durch Crimpen oder Schweißen umfasst.

11. Verfahren zum Herstellen einer Blei-Säure-Batterie (1) nach einem der Ansprüche 1 bis 10, ferner umfassend Anordnen der negativen Elektrodenplatte (2) derart, dass die negative Elektrodenplatte (2) in dem Separator (4, 100) aufgenommen ist, der zu einer Beutelform verarbeitet ist.

**Revendications**

1. Procédé de fabrication d'une batterie au plomb-acide (1) ayant un groupe d'électrodes dans lequel une pluralité de plaques d'électrode positive (3) et une pluralité de plaques d'électrode négative (2) sont empilées via un séparateur (4, 100),
   le procédé comprenant de :

   transformer le séparateur (4, 100) en une forme de poche ayant une première zone et une deuxième zone dirigées l'une vers l'autre,
   dans lequel
   l'étape de transformation du séparateur (4, 100) en une forme de poche inclut la formation d'une partie de joint (109a, 109b) qui inclut au moins une partie de la première zone et au moins une partie de la deuxième zone, une pluralité de premières nervures (102a, 102c) sont agencées dans la première zone,
   une pluralité de secondes nervures (102b, 102d) sont agencées dans la deuxième zone, et
   l'étape de formation de la partie de joint (109a, 109b) inclut d'amener la première zone et la deuxième zone l'une en face de l'autre de sorte qu'au moins une des premières nervures (102c) et au moins une des secondes nervures (102d) se coupent sur la partie de joint (109a, 109b).

2. Procédé de fabrication d'une batterie au plomb-acide (1) selon la revendication, dans lequel

   l'étape de formation de la partie de joint (109a, 109b) inclut le pliage d'une tôle de séparateur quadrangulaire (101) en deux, la tôle de séparateur (101) ayant la première zone et la deuxième zone sur la même surface principale et ayant comme axe des côtés opposés parallèles, le long d'une direction (Y) inclinée par rapport à une direction (X) perpendiculaire aux côtés opposés pour amener la première zone et la deuxième zone l'une en face de l'autre, et
   tant la première nervure (102c) que la seconde nervure (102d) s'étendent toutes deux linéairement dans la même direction sur la surface principale dans une zone située dans la première zone de la tôle de séparateur (101) où au moins la partie de joint (109a, 109b) est agencée et dans une zone située dans la deuxième zone sur la tôle de séparateur (101) où au moins la partie de joint (109a, 109b) est agencée.

3. Procédé de fabrication d'une batterie au plomb-acide (1) selon la revendication 2, dans lequel tant la première nervure (102c) que la seconde nervure (102d) s'étendent toutes deux sur la surface principale dans une direction parallèle aux côtés opposés dans la zone située dans la première zone de la tôle de séparateur (101) où au moins la partie de joint (109a, 109b) est agencée et dans une zone située dans la deuxième zone de la tôle de séparateur (101) où au moins la partie de joint (109a, 109b) est agencée.

4. Procédé de fabrication d'une batterie au plomb-acide (1) selon la revendication 2, dans lequel tant la première nervure (102c) que la seconde nervure (102d) s'étendent toutes deux sur la surface principale dans une direction perpendiculaire aux côtés opposés dans la zone située dans la première zone de la tôle de séparateur (101) où au moins la partie de joint (109a, 109b) est agencée et dans la zone située dans la deuxième zone de la tôle de séparateur (101) où au moins la partie de joint (109a, 109b) est agencée.

5. Procédé de fabrication d'une batterie au plomb-acide (1) selon l'une quelconque des revendications 1 à 4, dans lequel une forme extérieure de la première zone est un quadrangle, et la partie de joint (109a, 109b) est agencée dans chacune des zones près d'au moins deux côtés constituant le quadrangle.

6. Procédé de fabrication d'une batterie au plomb-acide (1) selon l'une quelconque des revendications 1 à 5, dans lequel

   une zone de joint (108a, 108b) pourvue de la partie de joint (109a, 109b) et une zone de plaque (106) séparée de la zone de joint (109a, 109b) sont agencées tant dans la première zone que dans la deuxième zone, et

les premières nervures (102a, 102c) incluent une pluralité de premières nervures de joint (102c) agencées à un intervalle régulier dans la zone de joint (108a, 108b) dans la première zone, et
une pluralité de premières nervures de plaque (102a) sont agencées à un intervalle régulier dans la zone de plaque (106) dans la première zone, et
l'intervalle auquel les premières nervures de joint (102c) sont agencées est plus petit que l'intervalle auquel les premières nervures de plaque (102a) sont agencées.

7.  Procédé de fabrication d'une batterie au plomb-acide (1) selon la revendication 6, dans lequel

la seconde nervure (102b, 102d) inclut
une pluralité de secondes nervures de joint (102d) agencées à un intervalle régulier dans la zone de joint (108a, 108b) dans la deuxième zone, et
une pluralité de secondes nervures de plaque (102b) agencées à un intervalle régulier dans la zone de plaque (106) dans la deuxième zone, et
l'intervalle auquel les secondes nervures de joint (102d) sont agencées est plus petit que l'intervalle auquel les secondes nervures de plaque (102b) sont agencées.

8.  Procédé de fabrication d'une batterie au plomb-acide (1) selon l'une quelconque des revendications 1 à 7, dans lequel

une troisième zone est agencée sur une surface arrière de la première zone, et une quatrième zone est agencée sur une surface arrière de la deuxième zone,
une pluralité de troisièmes nervures (104a, 104b) sont agencées dans la troisième zone, et
une pluralité de quatrièmes nervures sont agencées dans la quatrième zone.

9.  Procédé de fabrication d'une batterie au plomb-acide (1) selon la revendication 8, dans lequel les troisièmes nervures (104a, 104b) sont agencées dans la troisième zone correspondant à une zone où au moins la partie de joint (109a, 109b) est agencée dans la première zone.

10. Procédé de fabrication d'une batterie au plomb-acide (1) selon l'une quelconque des revendications 1 à 9, dans lequel l'étape de formation de la partie de joint (109a, 109b) inclut l'assemblage d'au moins une partie de la première zone et d'au moins une partie de la deuxième zone par sertissage ou soudage.

11. Procédé de fabrication d'une batterie au plomb-acide (1) selon l'une quelconque des revendications 1 à 10, comprenant en outre de
disposer la plaque d'électrode négative (2) de telle sorte que la plaque d'électrode négative (2) est logée dans le séparateur (4, 100) transformé en une forme de poche.

Fig. 1

Fig. 2

Fig. 3

(a)                                   (b)

Fig. 4

Fig. 5

Fig. 6

Fig. 7

**EP 3 683 863 B1**

**REFERENCES CITED IN THE DESCRIPTION**

**Patent documents cited in the description**

- JP 2015022796 A
- JP 3109387 U
- JP 5043462 A
- JP 2009245901 A